# EUROPÄISCHE PATENTSCHRIFT

(11) **EP 3 095 298 B1**
(45) Veröffentlichungstag und Bekanntmachung des Hinweises auf die Patenterteilung: **01.01.2020**
(21) Anmeldenummer: 14796031.4
(22) Anmeldetag: 05.11.2014
(51) Int. Cl.: H05B 33/08

(54) **SCHALTUNGSANORDNUNG ZUM BETREIBEN VON LICHTQUELLEN**
DRIVER CIRCUIT FOR LIGHT SOURCES
CIRCUIT D'EXCITATION POUR UNE SOURCE LUMINEUSE

(30) Priorität: 17.01.2014 DE 102014200865
(43) Veröffentlichungstag der Anmeldung: 23.11.2016
(73) Patentinhaber: OSRAM GmbH, 80807 München (DE)
(72) Erfinder: HECKMANN, Markus, 81479 München (DE); MÜHLSCHLEGEL, Joachim, Gröbenzell 82194 (DE); POLLISCHANSKY, Thomas, 81371 München (DE); SCHMITT, Harald, 80689 München (DE)
(86) Internationale Anmeldenummer: PCT/EP2014/073783
(87) Internationale Veröffentlichungsnummer: WO 2015/106850

(56) Entgegenhaltungen:
- CH-A5- 696 920
- DE-A1- 19 850 853
- DE-A1-102009 047 632
- DE-A1-102010 041 632
- US-A1- 2012 280 628

## Beschreibung

### Technisches Gebiet

Die Erfindung geht aus von einer Schaltungsanordnung zum Betreiben von Lichtquellen, mit Eingangsanschlüssen zum Eingeben einer Netzspannung, einer ersten Gleichrichtschaltung, einem Hochsetzsteller mit Ausgangsanschlüssen, einer Halbbrückenanordnung aus zwei Schaltern, die an die Ausgangsanschlüsse angeschlossen ist, einer Induktivität, deren erster Anschluss mit dem Mittelpunkt der Halbbrückenanordnung gekoppelt ist, einer zweiten Gleichrichtschaltung, deren erster Eingangsanschluss mit dem zweiten Anschluss der Induktivität gekoppelt ist, und deren zweiter Eingang mit mindestens einem der Ausgangsanschlüsse gekoppelt ist.

### Hintergrund

Die Erfindung geht aus von einer Schaltungsanordnung zum Betreiben von Lichtquellen nach der Gattung des Hauptanspruchs.

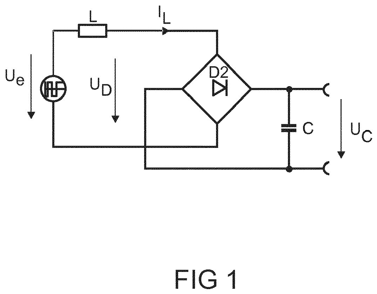

Fig. 1 zeigt eine bekannte Schaltungsanordnung mit resonanter Ausgangscharakteristik. Die Drossel L reguliert den Strom aus einer Pulsquelle Uₑ. Der durch die Drossel begrenzte Wechselstrom wird durch einen Brückengleichrichter gleichgerichtet und durch einen Kondensator gefiltert.

In der Praxis gibt es aber mit solch einer Schaltungsanordnung Probleme bezüglich der elektromagnetischen Verträglichkeit. Das Problem zeigt sich bei üblichen Anordnungen von Halbleiterlichtquellen wie LEDs als Last. Diese sind üblicherweise auf dünnen Leiterplatten angeordnet, die wiederum auf einem metallischen Kühlkörper zur Kühlung der LEDs montiert sind. Die Kühlkörper sind normalerweise aus Sicherheitsgründen geerdet. Dabei treten parasitäre Kapazitäten C_{Modul} zwischen den LEDs und dem geerdeten Kühlkörper auf. Diese parasitären Kapazitäten können mit bis zu 2nF recht groß sein. Aufgrund der großen parasitären Kapazitäten ist auch das Störpotenzial entsprechend hoch.

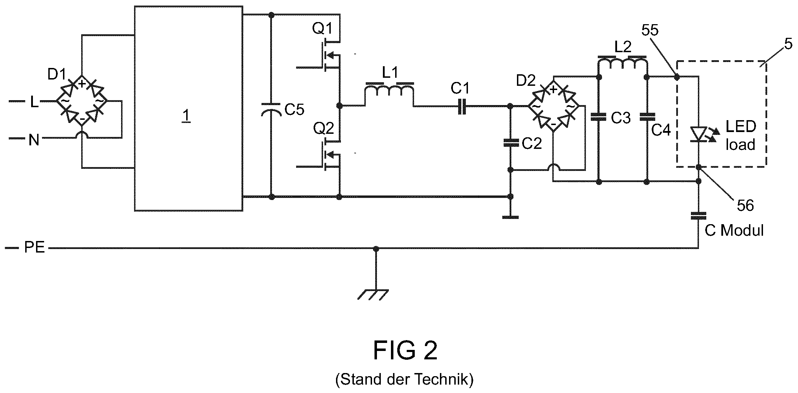

**Fig. 2** zeigt einen realenTestaufbau ähnlich der in **Fig. 1** beschriebenen Schaltung auf Basis eines resonant arbeitenden Betriebsgerätes für Leuchtstofflampen. Die an den beiden Eingangsanschlüssen anliegende Netzspannung wird durch den ersten Brückengleichrichter D1 gleichgerichtet und durch eine Hochsetzstellerschaltung, die oftmals als Netzleistungsfaktorkorrekturschaltung arbeitet, auf eine Zwischenkreisspannung von etwa 400V an dem Zwischenkreiskondensator C5 gewandelt. Mittels einer Halbbrückenanordnung, die an die Ausgangsanschlüsse der Hochsetzstellerschaltung angeschlossen ist, wird aus der hochgesetzten Gleichspannung eine Rechteckspannung generiert. Die Halbbrückenanordnung besteht aus zwei in Serie geschalteten Transistoren Q1 und Q2. Die Drossel L1 und der Blockkondensator C1 bilden einen Resonanzkreis. Durch den Blockkondensator C1 werden die Gleichspannungsanteile des Signals gefiltert. Der Ausgangsstrom des Resonanzkreises wird durch den zweiten Brückengleichrichter D2 gleichgerichtet und durch einen Pi-Filter aus C3, L2 und C4 geglättet. Parallel zum Kondensator C4 sind die Halbleiterlichtquellen angeordnet. Zwischen dem LED-Modul 5 und der Erdung PE des Netzes befindet sich die parasitäre Kapazität C_{Modul}. Diese ist vereinfachend zwischen der Kathode der untersten Halbleiterlichtquelle beziehungsweise dem negativen Anschluss 56 des LED-Moduls und der Erdung PE eingezeichnet.

In der Praxis hat sich gezeigt, dass zwischen den Halbleiterlichtquellen und dem geerdeten Kühlkörper hohe Erdungsströme von über 100mA über die parasitäre Kapazität C_{Modul} fließen können.

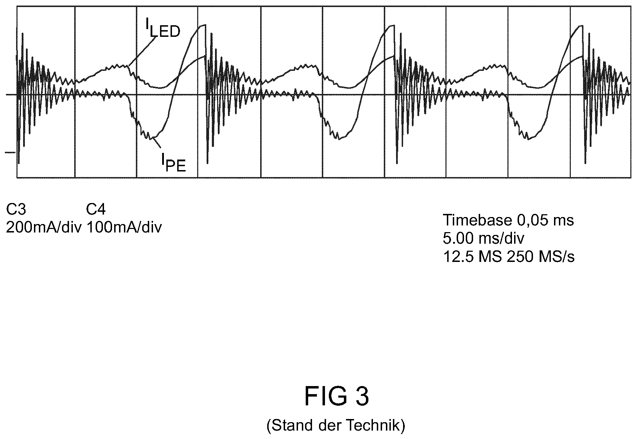

**Fig. 3** zeigt diesen Erdungsstrom I_{PE} in einem Oszillogramm. Der Strom I_{LED} ist der Betriebsstrom durch die LEDs. Durch diese hohen Erdungsströme entstehen starke elektromagnetische Störungen. Diese Ströme sind oberhalb der Grenzwerte vieler entsprechend gültigen Normen für Leuchtenanordnungen, bei denen das Betriebsgerät für die LEDs und das LED-Modul örtlich getrennt sind. Durch die unzulässig hohen Erdströme und die starken elektromagnetischen Störungen ist diese Schaltungstopologie nicht für die oben genannte Anwendung einsetzbar.

Eine im Stand der Technik bekannte Lösung mit einer Einweggleichrichtung zeigt **Fig. 4****.** Anstatt dem zweiten Brückengleichrichter wird eine einfache Diode D3 verwendet. Dadurch liegt die Kathode der untersten LED, und damit der Minus Pol 56 des LED-Moduls 5 immer auf Masse. Durch diese Maßnahme kann sich kein signifikanter Störstrom über die parasitäre Kapazität C_{Modul} ausbilden.

Durch die Einweggleichrichtung leitet aber die Diode D3 nur bei einer Polarität des Resonanzkreises aus L1 und C2, daher ist ein im Vergleich zum LED-Strom hoher Blindstrom notwendig, was zu höheren Verlusten und einem geringen Wirkungsgrad der Schaltungsanordnung von nur 80% bis 85% führt.

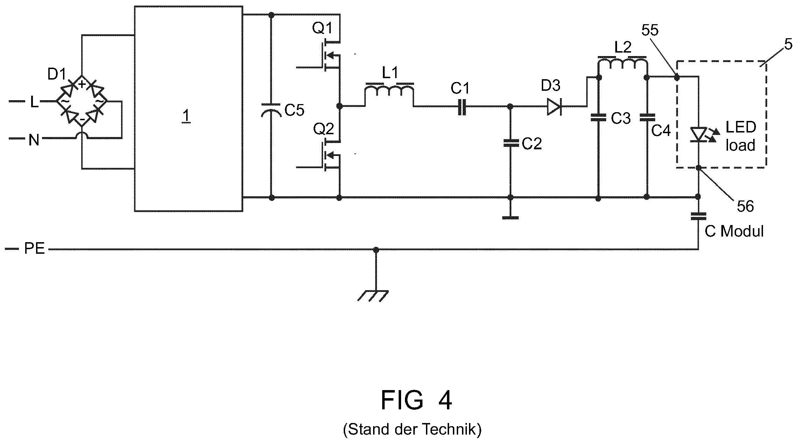

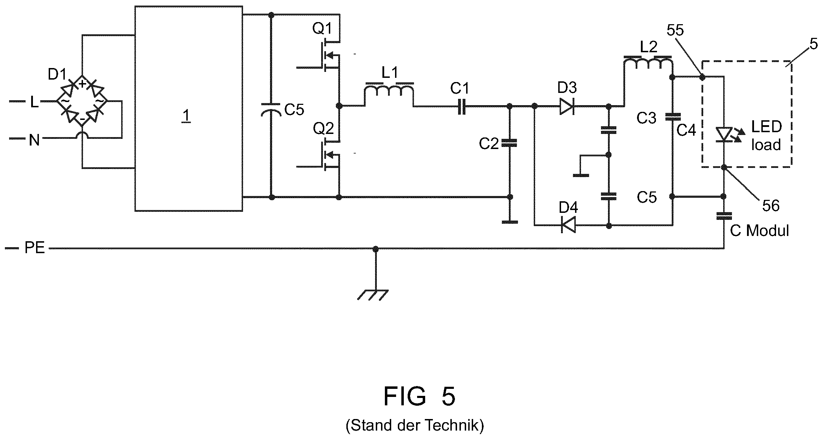

**Fig. 5** zeigt eine Alternative mit einer Spannungsverdopplerschaltung. Diese Schaltung weist zwei Dioden D3 und D4 auf, wodurch eine Vollwellencharakteristik gegeben ist. Bei positiver Polarität der Resonanzspannung an C2 fließt ein Strom durch D3, bei negativer durch D4. Die Kondensatoren C3 und C5 sorgen für einen Stromfluss zu Masse. In Vergleich zu dem Brückengleichrichter gemäß Fig. 2 ist der hochfrequente Spannungshub zur Masse aber sehr klein. Die Vor- und Nachteile der Schaltung sind ähnlich der Schaltung mit Einweggleichrichtung gemäß Fig. 4.

Aus der DE 10 2009 047 632 A1 ist eine Schaltungsanordnung bekannt, die eine Ladungspumpe zur Verbesserung der Leistungsfaktorkorrektur aufweist. Die Schrift offenbart aber keinerlei Maßnahmen zur Verbesserung der elektromagnetischen Verträglichkeit oder zur Verminderung der Erdungsströme.

Aus der DE 198 50 853 A1 ist ein Frequenzumrichter zur Ansteuerung eines Elektromotors bekannt, die zur Unterdrückung asymmetrischer Störungen eine stromkompensierte Drossel und zwei auf Masse wirkende Kondensatoren aufweist.

Aus der CH 696 920 A5 ist eine Vorrichtung mit einem Netzfilter und einem Gleichrichter bekannt, wobei der Netzfilter eine stromkompensierte Drossel aufweist.

### Aufgabe

Es ist Aufgabe der Erfindung, eine Schaltungsanordnung zum Betreiben von Lichtquellen anzugeben, die die oben genannten Nachteile nicht mehr aufweist.

### Darstellung der Erfindung

Die Lösung der Aufgabe erfolgt erfindungsgemäß mit einer Schaltungsanordnung zum Betreiben von Lichtquellen, mit Eingangsanschlüssen zum Eingeben einer Netzspannung, einer ersten Gleichrichtschaltung, einem Hochsetzsteller mit Ausgangsanschlüssen, einer Halbbrückenanordnung aus zwei Schaltern, die an die Ausgangsanschlüsse des Hochsetzstellers angeschlossen ist, einer Induktivität, deren erster Anschluss mit dem Mittelpunkt der Halbbrücke gekoppelt ist, einer zweiten Gleichrichtschaltung, deren erster Eingangsanschluss mit dem zweiten Anschluss der Induktivität gekoppelt ist, und deren zweiter Eingang mit mindestens einem der Ausgangsanschlüsse des Hochsetzstellers gekoppelt ist, wobei die Ausgangsanschlüsse der zweiten Gleichrichtschaltung mit den Eingängen einer stromkompensierten Drossel gekoppelt sind, wobei mindestens eine Lichtquelle an die Ausgangsanschlüsse der stromkompensierten Drossel angeschlossen ist, und die Ausgangsanschlüsse der stromkompensierten Drossel über Filterkondensatoren mit einem Ausgangsanschluss des Hochsetzstellers gekoppelt sind.Durch diese Maßnahme werden die Erdströme zuverlässig unterbunden, da durch die Rückkopplung durch die Filterkondensatoren an den Hochsetzsteller das Potential gegenüber der Erde angeglichen wird. Die stromkompensierte Drossel unterbindet hierbei einen Kurzschluss vom Hochsetzsteller über den Brückengleichrichter.

Bevorzugt ist zwischen der Induktivität und der zweiten Gleichrichtschaltung ein Koppelkondensator geschaltet. Dieser unterbindet einen Gleichanteil im Gleichrichterstrom .

In einer weiteren Ausgestaltung ist zwischen den zweiten Eingang der zweiten Gleichrichtschaltung und ein Bezugs- beziehungsweise Versorgungspotential der Halbbrückenanordnung je ein Koppelkondensator geschaltet. Durch dies Maßnahme wird die Schaltung symmetrischer, was sich auch auf die Bauteilebelastung auswirkt.

Bevorzugt ist das Verhältnis der Kapazitäten der Filterkondensatoren größer als 1:10. Damit ist einer der Filterkondensatoren sehr klein, und kann mit der Streuinduktivität der stromkompensierten Drossel zusammen wirken. Damit weist der Ausgang der erfindungsgemäßen Schaltungsanordnung eine Stromquellencharakteristik auf.

Weitere vorteilhafte Weiterbildungen und Ausgestaltungen der erfindungsgemäßen Schaltungsanordnung zum Betreiben von Lichtquellen ergeben sich aus weiteren abhängigen Ansprüchen und aus der folgenden Beschreibung.

### Kurze Beschreibung der Zeichnungen

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind. Dabei zeigen:
- Fig.1: ein schematisches Schaltbild einer bekannten Schaltung nach dem Stand der Technik,
- Fig. 2: ein reales Schaltbild obiger Schaltung mit allen funktionsrelevanten Bauteilen,
- Fig. 3: die Kurvenform des Erdleitungsstroms und des LED-Stroms die beim Betrieb obiger Schaltung gemäß Fig. 2 auftritt,
- Fig. 4: das Schaltbild einer alternativen Ausführungsform nach dem Stand der Technik mit einer Halbwellengleichrichtung,
- Fig. 5: das Schaltbild einer anderen alternativen Ausführungsform nach dem Stand der Technik mit einer Spannungsverdopplungsschaltung,
- Fig. 6: das Schaltbild einer ersten erfindungsgemäßen Ausführungsform mit einer stromkompensierten Drossel,
- Fig. 7: das Schaltbild einer zweiten erfindungsgemäßen Ausführungsform mit einer stromkompensierten Drossel.

### Bevorzugte Ausführung der Erfindung

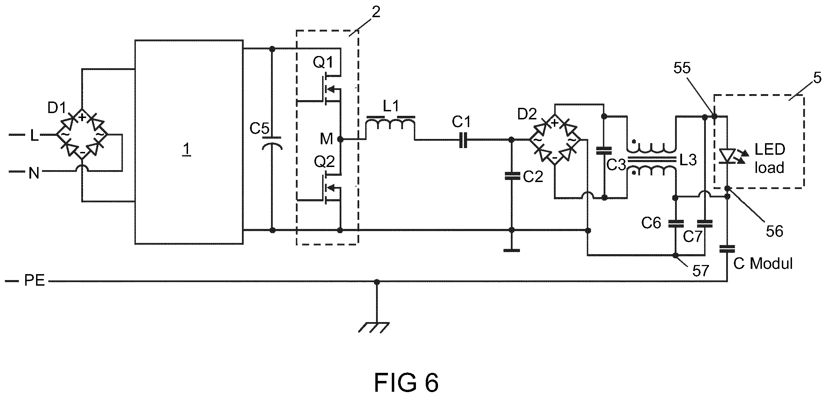

**Fig. 6** zeigt das Schaltbild einer ersten erfindungsgemäßen Ausführungsform der Schaltungsanordnung zum Betreiben von Lichtquellen mit einer stromkompensierten Drossel.

Die erfindungsgemäße Schaltungsanordnung weist zwei Eingänge L, N zum Eingeben einer Netzspannung auf. Diese Eingänge sind mit einer ersten Gleichrichtschaltung, z.B. einem Brückengleichrichter D1 gekoppelt, dessen Ausgänge mit den Eingängen einer Hochsetzstellerschaltung 1 gekoppelt sind. Die Hochsetzstellerschaltung 1 ist oftmals als Leistungsfaktorkorrekturschaltung ausgeführt, um den Netzleistungsfaktor der Schaltungsanordnung hoch zu halten. Die Hochsetzstellerschaltung arbeitet auf einen Speicherkondensator C5, der oft auch als Zwischenkreiskondensator bezeichnet wird. Parallel zum Zwischenkreiskondensator C5 ist eine Halbbrückenanordnung 2 geschaltet. Die Halbbrückenanordnung 2 besteht aus 2 in Serie geschalteten Transistoren Q1 und Q2, deren Halbbrückenmittelpunkt mit M bezeichnet wird. Mit dem Halbbrückenmittelpunkt M ist der erste Anschluss einer Drossel L1 gekoppelt, deren zweiter Anschluss mit dem ersten Anschluss eines Blockkondensators C1 gekoppelt ist. Dessen zweiter Anschluss ist mit einem ersten Eingang einer zweiten Gleichrichtschaltung, z.B. eines zweiten Brückengleichrichters D2, sowie mit dem ersten Anschluss eines Resonanzkondensators C2gekoppelt. Der Blockkondensator C1 ist für die korrekte Funktion der Schaltungsanordnung allerdings nicht zwingend notwendig. Er stellt lediglich sicher, dass der Strom durch die Drossel L1 keinen Gleichanteil aufweist. Der zweite Eingang des Brückengleichrichters D2 ist mit dem Bezugspotential der Halbbrückenanordnung gekoppelt. Der zweite Anschluss des Resonanzkondensators C2 ist an das Bezugspotenzial der Halbbrückenanordnung angeschlossen. Die Ausgänge des zweiten Brückengleichrichters D2 sind mit jeweils einem ersten Anschluss einer Wicklung der stromkompensierten Drossel gekoppelt. An die Ausgänge des zweiten Brückengleichrichters D2 ist ein Kondensator C3 angeschlossen. Ein LED-Modul 5 mit mindestens einer LED ist mit dem jeweils zweiten Anschluss der Wicklung der stromkompensierten Drossel L3 gekoppelt. Der zweite Anschluss der mit dem positiven Ausgang des Brückengleichrichters gekoppelten Wicklung der stromkompensierten Drossel L3 ist mit einem Filterkondensator C7 und mit dem positiven Eingang 55 des LED-Moduls 5 gekoppelt. Der zweite Anschluss der mit dem negativen Ausgang des Brückengleichrichters D2 gekoppelten Wicklung der stromkompensierten Drossel L3 ist mit einem Filterkondensator C6 und mit dem negativen Eingang 56 des LED-Moduls 5 gekoppelt. Die anderen Anschlüsse der Filterkondensatoren C6 und C7 bilden einen Mittelpunkt 57. Dieser Mittelpunkt 57 ist mit dem Bezugspotential der Halbbrückenanordnung gekoppelt. Die parasitäre Kapazität C_{Modul} besteht als verteilte Kapazität zwischen dem LED-Modul und der Erde PE.

Die Drossel L1 und der Resonanzkondensator C2 bilden zusammen einen Resonanzkreis, was der Anordnung eine resonante Ausgangscharakteristik verleiht. Dabei wird über die Dimensionierung der Drossel L1 der Ausgangsstrom eingestellt. Bis zum Koppelkondensator C1 entspricht die Schaltung bekannten Schaltungen für Betriebsgeräte für Niederdruck-Entladungslampen. Besonders häufig wird dieser Schaltungstyp bei Betriebsgeräten für Leuchtstofflampen eingesetzt. Diese können nun mit der erfindungsgemäßen Modifikation für den Betrieb von LED-Modulen eingesetzt werden.

Erfindungsgemäß dämpfen die Filterkondensatoren C6 und C7 zusammen mit der stromkompensierten Drossel L3 den Erdungsstrom durch C_{Modul}. Da der Erdungsstrom symmetrisch durch die stromkompensierte Drossel L3 fließt wird er bedämpft. Dadurch, dass C6 und C7 direkt mit der Masse des Resonanzkreises und damit über den ersten Brückengleichrichter D1 mit dem Netz verbunden sind, können sie hochfrequente Störungen durch C_{Modul} kurzschließen.

Gleichzeitig filtern die Bauelemente C3, C6, C7 und L3 den hochfrequenten Ripple des LED-Stroms durch das LED-Modul 5.

Der LED-Strom selbst hingegen wird nicht gedämpft, da er für die stromkompensierte Drossel L3 einen Gegentaktstrom mit hohem Gleichanteil darstellt.

Die Filterkondensatoren C6 und C7 können auch unsymmetrisch ausgeführt werden, so dass der größere Kondensator auch den hochfrequenten Ripple des Stromes durch das LED-Modul 5 dämpft, der kleinere jedoch lediglich den Erdungsstrom durch C_{Modul}. Der größere Kondensator sollte dabei eine Kapazität zwischen 20nF und 200 nF aufweisen, der kleinere eine Kapazität zwischen 1nF und 10nF. Der Unterschied der Kapazitäten zwischen C6 und C7 in dieser Ausführungsform sollte also mindestens 1:10 betragen. Dabei ist es unerheblich, welcher der beiden Kondensatoren die größere und welcher die kleinere Kapazität aufweist.

Mit der erfindungsgemäßen Schaltungsanordnung wird der Erdungsstrom durch C_{Modul} etwa um den Faktor 20 verringert. Dadurch strahlt die erfindungsgemäße Schaltungsanordnung wesentlich weniger elektromagnetische Störungen ab, und die geltenden Grenzwerte können leicht eingehalten werden.

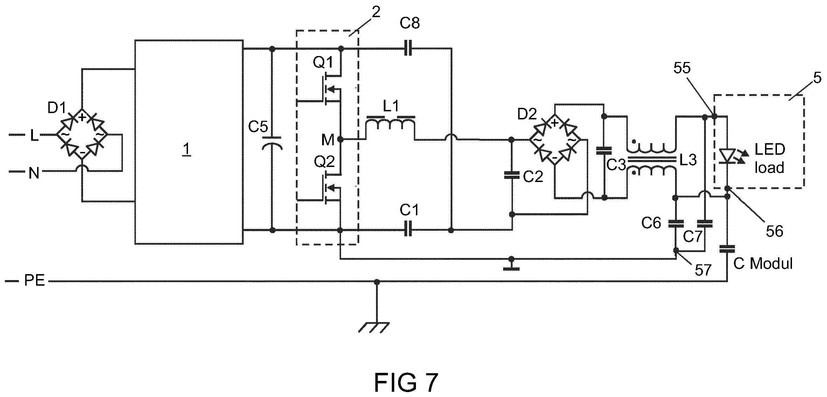

**Fig. 7** zeigt das Schaltbild einer zweiten erfindungsgemäßen Ausführungsform der Schaltungsanordnung zum Betreiben von Lichtquellen mit einer stromkompensierten Drossel. Die zweite Ausführungsform ist sehr ähnlich zur ersten Ausführungsform, es werden daher nur die Unterschiede zur ersten Ausführungsform erläutert.

Die Schaltungsanordnung gemäß der zweiten Ausführungsform weist anstatt eines unsymmetrischen Koppelkondensators C1 deren zwei symmetrisch geschaltete Koppelkondensatoren C1, C8 auf. Der Koppelkondensator ist daher an der bisherigen Stelle zwischen der Drossel L1 und dem zweiten Brückengleichrichter D2 entfernt. Der zweite Anschluss der Drossel L1 ist direkt an den ersten Eingang des Brückengleichrichters D2 angeschlossen. Der zweite Eingang des Brückengleichrichters D2 ist mit einem ersten Koppelkondensator C1 und mit einem zweiten Koppelkondensator C8 gekoppelt. Der andere Anschluss des ersten Koppelkondensators C1 ist mit dem Bezugspotential der Halbbrückenanordnung 2 gekoppelt. Der andere Anschluss des zweiten Koppelkondensators C8 ist mit dem Versorgungspotential der Halbbrückenanordnung 2 gekoppelt. Ein Filterkondensator C6 ist mit dem Ausgang der Wicklung der stromkompensierten Drossel L3 verbunden, dessen Eingang mit dem negativen Ausgang des zweiten Brückengleichrichters gekoppelt ist. Ein Filterkondensator C7 ist mit dem Ausgang der Wicklung der stromkompensierten Drossel L3 verbunden, dessen Eingang mit dem positiven Ausgang des zweiten Brückengleichrichters gekoppelt ist. Die anderen Anschlüsse der Filterkondensatoren C6 und C7 sind zusammengeschaltet, und mit dem Bezugspotential der Halbbrückenanordnung 2 verbunden. Sie sind damit ebenfalls mit C1 gekoppelt. Durch die symmetrische Ausführung der Koppelkondensatoren C1 und C8 ist die Belastung einiger Bauteile wie z.B. des Kondensators C5 geringer.

### Bezugszeichenliste

- 1: Hochsetzsteller
- 2: Halbbrückenanordnung
- 5: LED-Modul
- 55: positiver Anschluss des LED-Moduls
- 56: negativer Anschluss des LED Moduls
- L, N: Eingangsanschlüsse zum Eingeben einer Netzspannung
- D1: erste Gleichrichtschaltung beziehungsweise erster Brückengleichrichter
- D2: zweite Gleichrichtschaltung beziehungsweise zweiter Brückengleichrichter
- C1, C8: erster, zweiter Koppelkondensator
- C2: Resonanzkondensator
- C6, C7: Filterkondensatoren
- L1: Drossel
- L3: stromkompensierte Drossel
- C_{Modul}: parasitäre Kapazität

## Patentansprüche

1. Schaltungsanordnung zum Betreiben von Lichtquellen, aufweisend:
- Eingangsanschlüsse (L, N) zum Eingeben einer Netzspannung,
- eine erste Gleichrichtschaltung (D1)
- eine Halbbrückenanordnung (2) aus zwei Schaltern (Q1, Q2),
- eine Induktivität (L1), deren erster Anschluss mit dem Mittelpunkt (M) der Halbbrückenanordnung gekoppelt ist,
- eine zweite Gleichrichtschaltung (D2), deren erster Eingangsanschluss mit dem zweiten Anschluss der Induktivität (L1) gekoppelt ist,
**dadurch gekennzeichnet, dass**
die Schaltungsanordnung weiterhin aufweist:
- einen Hochsetzsteller (1) mit Ausgangsanschlüssen, an welche die Halbbrückenanordnung gekoppelt ist,
- eine stromkompensierte Drossel (L3), deren Eingangsanschlüsse mit den Ausgangsanschlüssen der zweiten Gleichrichtschaltung (D2) gekoppelt sind, und
- mindestens eine Lichtquelle (5), die an die Ausgangsanschlüsse (55, 56) der stromkompensierten Drossel (L3) angeschlossen ist, wobei
- die Ausgangsanschlüsse (55, 56) der stromkompensierten Drossel (L3) über Filterkondensatoren (C6, C7) sowie der zweite Eingangsanschluss der zweiten Gleichrichtschaltung (D2) mit einem Ausgangsanschluss (57) des Hochsetzstellers gekoppelt sind.

2. Schaltungsanordnung nach Anspruch 1, **dadurch gekennzeichnet, dass** zwischen der Induktivität (L1) und der zweiten Gleichrichtschaltung (D2) ein Koppelkondensator (C1) geschaltet ist.

3. Schaltungsanordnung nach Anspruch 1, **dadurch gekennzeichnet, dass** zwischen den zweiten Eingangsanschluss der zweiten Gleichrichtschaltung (D2) und ein Bezugs- beziehungsweise Versorgungspotential der Halbbrückenanordnung (2) je ein Koppelkondensator (C1, C8) geschaltet ist.

4. Schaltungsanordnung nach einem der vorhergehenden Ansprüche, **dadurch gekennzeichnet, dass** das Verhältnis der Kapazitäten der Filterkondensatoren (C6, C7) größer ist als 1:10.

## Claims

1. Circuit arrangement for operating light sources, comprising:
- input terminals (L, N) for inputting a power supply system voltage,
- a first rectifying circuit (D1),
- a half-bridge arrangement (2) comprising two switches (Q1, Q2),
- an inductance (L1), the first terminal of which is coupled to the centre point (M) of the half-bridge arrangement,
- a second rectifying circuit (D2), the first input terminal of which is coupled to the second terminal of the inductance (L1),
**characterized in that**
the circuit arrangement further comprises:
- a boost converter (1) having output terminals to which the half-bridge arrangement is coupled,
- a current-compensated inductor (L3), the input terminals of which are coupled to the output terminals of the second rectifying circuit (D2), and
- at least one light source (5) which is connected to the output terminals (55, 56) of the current-compensated inductor (L3), wherein
- the output terminals (55, 56) of the current-compensated inductor (L3) are coupled to an output terminal (57) of the boost converter via filter capacitors (C6, C7) and the second input terminal of the second rectifying circuit (D2) is coupled to an output terminal (57) of the boost converter.

2. Circuit arrangement according to Claim 1, **characterized in that** a coupling capacitor (C1) is connected between the inductance (L1) and the second rectifying circuit (D2).

3. Circuit arrangement according to Claim 1, **characterized in that** a respective coupling capacitor (C1, C8) is connected between the second input terminal of the second rectifying circuit (D2) and a reference and respectively supply potential of the half-bridge arrangement (2).

4. Circuit arrangement according to any of the preceding claims, **characterized in that** the ratio of the capacitances of the filter capacitors (C6, C7) is greater than 1:10.

## Revendications

1. Agencement de circuit pour l'actionnement de sources lumineuses, comportant :
- des bornes d'entrée (L, N) pour entrer une tension de secteur,
- un premier circuit de redressement (D1)
- un agencement en demi-pont (2) constitué de deux interrupteurs (Q1, Q2),
- une inductance (L1) dont la première borne est couplée au point central (M) de l'agencement en demi-pont,
- un second circuit de redressement (D2) dont la première borne d'entrée est couplée à la seconde borne de l'inductance (L1),
**caractérisé en ce que**
l'agencement de circuit comporte en outre :
- un convertisseur élévateur (1) pourvu de bornes de sortie auxquelles est couplé l'agencement en demi-pont,
- une bobine à compensation de courant (L3) dont les bornes d'entrée sont couplées aux bornes de sortie du second circuit de redressement (D2), et
- au moins une source lumineuse (5) connectée aux bornes de sortie (55, 56) de la bobine à compensation de courant (L3),
- les bornes de sortie (55, 56) de la bobine à compensation de courant (L3) étant couplées par l'intermédiaire de condensateurs de filtrage (C6, C7) et de la seconde borne d'entrée du second circuit de redressement (D2) à une borne de sortie (57) du convertisseur élévateur.

2. Agencement de circuit selon la revendication 1, **caractérisé en ce qu'**un condensateur de couplage (C1) est connecté entre l'inductance (L1) et le second circuit de redressement (D2).

3. Agencement de circuit selon la revendication 1, **caractérisé en ce qu'**un condensateur de couplage (C1, C8) est connecté entre la seconde borne d'entrée du second circuit de redressement (D2) et un potentiel de référence ou d'alimentation de l'agencement en demi-pont (2).

4. Agencement de circuit selon l'une des revendications précédentes, **caractérisé en ce que** le rapport entre les capacités des condensateurs de filtrage (C6, C7) est supérieur à 1:10.
